# EUROPEAN PATENT APPLICATION

(11) **EP 4 835 328 A1**
(43) Date of publication of application: **04.11.2026**
(21) Application number: 25173316.8
(22) Date of filing: 29.04.2025
(51) Int. Cl.: F16H 61/02

(54) **COMPUTER SYSTEM AND METHOD FOR DETERMINING A SHIFT POINT FOR A TRANSMISSION**

(71) Applicant: Volvo Truck Corporation, 405 08 Göteborg (SE)
(72) Inventor: WINBLAD, Hanna, 433 62 Sävedalen (SE); JAKOBSSON, Samuel, 418 73 Göteborg (SE)
(74) Representative: Zacco Sweden AB

(57) **Abstract**

A computer system (20) comprising processing circuitry (22) configured to: obtain a current temperature (T) of oil in a gearbox (18) in a transmission (16) of a vehicle (10); and determine a shift point for the transmission based on the obtained current temperature.

## Description

### TECHNICAL FIELD

The disclosure relates generally to powertrain energy efficiency. In particular aspects, the disclosure relates to a computer system and method for determining a shift point for a transmission. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In heavy transport, powertrain energy efficiency is key. Both to reduce emissions, and to lower the running costs. It is hence of interest to make adaptions to decrease the fuel and/or electricity usage of vehicles, e.g. to comply with legalizations.

### SUMMARY

According to a first aspect of the disclosure, there is provided a computer system comprising processing circuitry configured to: obtain a current temperature of oil in a gearbox in a transmission of a vehicle; and determine a shift point for the transmission based on the obtained current temperature. The first aspect of the disclosure may seek to improve the overall energy efficiency of the powertrain of the vehicle. A technical benefit may include that by determining a shift point based on the current gearbox oil temperature, powertrain energy losses can be decreased and the overall energy efficiency of the powertrain of the vehicle may be improved, in particular at lower temperatures, which in turn for example may improve the range of a battery electric vehicle. Lower temperatures means that lower rotational speed in the transmission gives the best operation point. A "shift point" may be construed as the (engine/motor) rpm at which the gearbox changes gears.

Optionally in some examples, including in at least one preferred example, the determined shift point may be positively correlated to the obtained current temperature. A technical benefit may include that lower shaft speeds will be kept if the gearbox oil is cold.

Optionally in some examples, including in at least one preferred example, the$newShiftspeed = baseShiftspeed - \left(baseOilTemp-currentOilTemp\right) ∗ X$processing circuitry may be configured to determine the shift point for the transmission by: where baseShiftSpeed is a default shift point, baseOilTemp is an optimal temperature of the oil in the gearbox (that a gear selection strategy is optimized for giving the default shift point), currentOilTemp is the obtained current temperature, X is a calibrated value of rpm, and newShiftspeed is the determined shift point.

Optionally in some examples, including in at least one preferred example, the determined shift point may be an upshift point or a downshift point. A technical benefit may include that both upshift and downshift points may be determined, e.g. to shift to/stay on higher gears when possible. An upshift point may be the rpm at which the gearbox should change to a higher gear, and a downshift point may be the rpm at which the gearbox should change to a lower gear.

Optionally in some examples, including in at least one preferred example, the processing circuitry may further be configured to control the transmission including the gearbox to (automatically) shift gears at the determined shift point.

Optionally in some examples, including in at least one preferred example, the processing circuitry may further be configured to determine a gear selection strategy for the transmission based on a cost function that weighs together metrics including powertrain efficiency of the vehicle, wherein a calculation of the powertrain efficiency includes a modelled loss dependent on the obtained current temperature. A technical benefit may include that by taking the current gearbox oil temperature into account, the powertrain efficiency calculation can be refined. This may be a separate invention. Hence, according to a further aspect of the disclosure, there is provided a computer system comprising processing circuitry configured to: obtain a current temperature of oil in a gearbox in a transmission of a vehicle; and determine a gear selection strategy for the transmission based on a cost function that weighs together metrics including powertrain efficiency of the vehicle, wherein a calculation of the powertrain efficiency includes a modelled loss dependent on the obtained current temperature.

Optionally in some examples, including in at least one preferred example, said loss may be modelled as: $FrictionLoss = gbxLossConst * {ω}^{m} * {c}^{∧ \left(baseOilTemp-currentOilTemp\right)}$ where gbxLossConst is a gear dependent friction loss factor, ω is main shaft speed in the gearbox, m is a model constant from empirical testing, c is a gear dependent factor, baseOilTemp is an optimal temperature of the oil in the gearbox, currentOilTemp is the obtained current temperature, and FrictionLoss is the modelled loss.

Optionally in some examples, including in at least one preferred example, the modelled loss may be increasingly nonlinear with main shaft speed in the gearbox. That is, the loss may initially rise slowly with main shaft speed, but as the main shaft speed increases, the loss rises more sharply.

Optionally in some examples, including in at least one preferred example, the processing circuitry may further be configured to control the transmission including the gearbox to (automatically) shift gears in accordance with the determined gear selection strategy.

According to a second aspect of the disclosure, there is provided a vehicle comprising the computer system of the first aspect. The vehicle may for example be a battery electric vehicle. Alternatively (or in addition), the vehicle may comprise an internal combustion engine such as a diesel engine for propulsion.

According to a third aspect of the disclosure, there is provided a computer-implemented method, comprising: obtaining, by processing circuitry of a computer system, a current temperature of oil in a gearbox in a transmission of a vehicle; and determining, by the processing circuitry, a shift point for the transmission based on the obtained current temperature. The third aspect of the disclosure may seek to improve the overall energy efficiency of the powertrain of the vehicle. A technical benefit may include that by determining a shift point based on the current gearbox oil temperature, powertrain energy losses can be decreased and the overall energy efficiency of the powertrain of the vehicle may be improved, in particular at lower temperatures, which in turn for example may improve the range of a battery electric vehicle. Lower temperatures means that lower rotational speed in the transmission gives the best operation point.

Optionally in some examples, including in at least one preferred example, the determined shift point may be positively correlated to the obtained current temperature. A technical benefit may include that lower shaft speeds will be kept if the gearbox oil is cold.

Optionally in some examples, including in at least one preferred example, the shift point for the transmission may be determined by: $newShiftspeed = baseShiftspeed - \left(baseOilTemp-currentOilTemp\right) * X$ where baseShiftSpeed is a default shift point, baseOilTemp is an optimal temperature of the oil in the gearbox (that a gear selection strategy is optimized for giving the default shift point), currentOilTemp is the obtained current temperature, X is a calibrated value of rpm, and newShiftspeed is the determined shift point.

Optionally in some examples, including in at least one preferred example, the determined shift point may be an upshift point or a downshift point. A technical benefit may include that both upshift and downshift points may be determined, e.g. to shift to/stay on higher gears when possible.

Optionally in some examples, including in at least one preferred example, the method may further comprise: controlling, by the processing circuitry, the transmission including the gearbox to (automatically) shift gears at the determined shift point.

Optionally in some examples, including in at least one preferred example, the method may further comprise: determining, by the processing circuitry, a gear selection strategy for the transmission based on a cost function that weighs together metrics including powertrain efficiency of the vehicle, wherein a calculation of the powertrain efficiency includes a modelled loss dependent on the obtained current temperature. A technical benefit may include that by taking the current gearbox oil temperature into account, the powertrain efficiency calculation can be refined. This may be a separate invention. Hence, according to a further aspect of the disclosure, there is provided a computer-implemented method, comprising: obtaining, by processing circuitry of a computer system, a current temperature of oil in a gearbox in a transmission of a vehicle; and determining, by the processing circuitry, a gear selection strategy for the transmission based on a cost function that weighs together metrics including powertrain efficiency of the vehicle, wherein a calculation of the powertrain efficiency includes a modelled loss dependent on the obtained current temperature.

Optionally in some examples, including in at least one preferred example, said loss may be modelled as: $FrictionLoss = gbxLossConst * {ω}^{m} * {c}^{∧ \left(baseOilTemp-currentOilTemp\right)}$ where gbxLossConst is a gear dependent friction loss factor, ω is main shaft speed in the gearbox, m is a model constant from empirical testing, c is a gear dependent factor, baseOilTemp is an optimal temperature of the oil in the gearbox, currentOilTemp is the obtained current temperature, and FrictionLoss is the modelled loss.

Optionally in some examples, including in at least one preferred example, the modelled loss may be increasingly nonlinear with main shaft speed in the gearbox. That is, the loss may initially rise slowly with main shaft speed, but as the main shaft speed increases, the loss rises more sharply.

Optionally in some examples, including in at least one preferred example, the method may further comprise: controlling, by the processing circuitry, the transmission including the gearbox to (automatically) shift gears in accordance with the determined gear selection strategy.

There are also disclosed herein computer systems, control units, code modules, computer-implemented methods, computer readable media, and computer program products associated with the above discussed technical benefits.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle comprising a computer system for determining a shift point according to an example.
**FIG. 2** is a flow chart of an exemplary method for determining a shift point according to an example.
**FIG.3** is a flow chart of an exemplary method for determining a gear selection strategy according to an example.
**FIG. 4** is a graph of friction losses in relation to main shaft speed.
**FIG. 5** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

The present disclosure may seek to improve the overall energy efficiency of the powertrain of the vehicle. According to an aspect of the disclosure, there is provided a computer system comprising processing circuitry configured to: obtain a current temperature of oil in a gearbox in a transmission of a vehicle; and determine a shift point for the transmission based on the obtained current temperature. Friction is one of the contributors to increased fuel/electricity need, since it leads to a higher resistance in the powertrain as a portion of the power input is wasted into friction energy (heat). In the context of friction, the viscosity of the oil in the transmission of the powertrain is dependent of its temperature, and a lower temperature means higher friction. In the start of a drive, the gearbox oil temperature is often equal to the ambient temperature, meaning that in e.g. Scandinavian winter climate, it can be as low as -20°C, whilst the optimal working temperature of the oil is 70°C. When the temperature of the oil is low, the friction is high, and the total energy efficiency of the powertrain can be improved by lowering the shaft speeds in the gearbox. Thus, a technical benefit of the present disclosure may include that by determining a shift point based on the current gearbox oil temperature, powertrain energy losses can be reduced and the overall energy efficiency of the powertrain of the vehicle may be improved, in particular at lower temperatures, which in turn for example may improve the range of a battery electric vehicle.

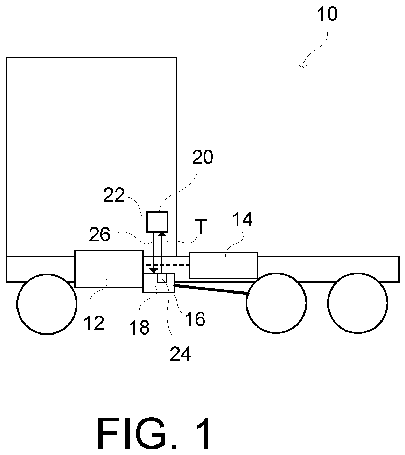

**FIG. 1** is a schematic side view of an exemplary vehicle 10 according to an example. The vehicle 10 may be a battery electric vehicle (BEV), as in **FIG. 1****.** As such, the vehicle 10 may comprise at least one electric motor 12 for propulsion of the vehicle 10, and at least one battery pack 14 for powering the at least one electric motor 12. Alternatively (or in addition), the vehicle 10 could comprise an internal combustion engine. The vehicle 10 may for example be a (heavy-duty) truck or tractor.

The vehicle 10 further comprises a transmission 16. The transmission 16 may be coupled to the at least one electric motor 12. The transmission 16 comprises a gearbox 18. The gearbox 18 may comprise at least two (forward) gears. The transmission 16 may for example be an automated manual transmission (AMT), such as Volvo I-Shift. Volvo I-Shift has 12 forward gears and 4 reverse gears.

The vehicle 10 further comprises a computer system 20, which in turn comprises processing circuitry 22.

The processing circuitry 22 is configured, by hardware and/or software, to obtain a current temperature T of oil in the gearbox 18. The current temperature T may for example be received from a temperature sensor 24 arranged in conjunction with the gearbox 18. The (current) temperature T may also be referred to as the (current) gearbox oil temperature. The oil in the gearbox 18 may for example be transmission fluid.

The processing circuitry 22 is further configured, by hardware and/or software, to determine a shift point for the transmission 16 based on the obtained current temperature T. The shift point may generally be the rpm of the at least one electric motor 12 at which the gearbox 18 should change gears, such as shift from forward gear 2 to forward gear 3 at 7000 rpm. Accordingly, the processing circuitry 22 may further be configured to control the transmission 16 to automatically shift gears at the determined shift point while the vehicle 10 is driving, as indicated by arrow 26 in **FIG. 1****.**

To account for shifting (typically increasing) gearbox oil temperatures, the processing circuitry 22 may be configured to continuously obtain/receive and determine/adjust the current gearbox oil temperature T and the shift point, respectively. Alternatively, the processing circuitry 22 may be configured to obtain/receive and determine/adjust the current gearbox oil temperature T and the shift point, respectively, at predetermined time intervals.

The determined shift point may be positively correlated to the obtained current temperature T. That is, for a lower current gearbox temperature T, the processing circuitry 22 may be configured to determine a lower shift point for the transmission 16, for example. This means that lower shaft speeds in the gearbox 18 will be kept if the oil in the gearbox 18 is cold, which in turn gives the best operation point. On the other hand, for a higher current gearbox temperature T, the processing circuitry 22 may be configured to determine a higher shift point for the transmission 16, which can favour the at least one electric motor 12.

The processing circuitry 22 may for example be configured to determine the shift point for the transmission by the equation:$newShiftspeed = baseShiftspeed - \left(baseOilTemp-currentOilTemp\right) ∗ X$ (1) where baseShiftSpeed is a default shift point, baseOilTemp is an optimal gearbox oil temperature, currentOilTemp is the obtained current temperature T, X is a calibrated value of rpm, and newShiftspeed is the determined shift point.

The default shift point may be a set value. Alternatively, the default shift point may be adjusted by other factors than the current gearbox oil temperature T. The optimal gearbox oil temperature may be an optimal temperature of the oil in the gearbox that a gear selection strategy of the transmission 16 is optimized for giving the default shift point. The X value may for example depend on the powertrain of the vehicle 10 (e.g. an electric motor may have different rpm ranges than a diesel engine). The X value could be empirically derived.

In a non-limiting example, baseShiftSpeed = 1500 rpm, baseOilTemp = 70°C, currentOilTemp = 20°C, and X = 2 rpm, whereby according to equation (1) newShiftspeed = 1500 - (70-20)*2 = 1400 rpm. That is, the determined shift point is here lower than the default shift point when the current gearbox oil temperature T is lower than the optimal gearbox oil temperature.

The shift point determined e.g. by equation (1) may be an upshift point or a downshift point, albeit the baseShiftspeed may be different. That is, both upshift and downshift points may be determined, for example to shift to/stay on higher gears when possible. Accordingly, the processing circuitry 22 may be configured to determine more than one shift point for the transmission 16 based on the obtained current temperature T, such as all the shift points, or the upshift and downshift points.

The processing circuitry 22 may further or alternatively be configured to determine a gear selection strategy for the transmission 18 based on a cost function that weighs together metrics including powertrain efficiency of the vehicle 10, wherein a calculation of the powertrain efficiency includes a modelled loss dependent on the obtained current temperature T. By taking the current gearbox oil temperature T into account, the powertrain efficiency calculation can be refined.

Herein, powertrain efficiency may correspond to a percentage of power generated by the vehicle's power unit (including the at least one electric motor 12 and/or an internal combustion engine) that is effectively transmitted to the wheels of the vehicle 10 by taking power loss into consideration. The powertrain includes at least the electric motor(s) 12 (and/or an internal combustion engine) and the transmission 16.

The gear selection strategy may generally determine the optimal gear for the vehicle's transmission 16 at any given time. Accordingly, the processing circuitry 22 may here further be configured to control the transmission 16 to automatically shift gears in accordance with the determined gear selection strategy while the vehicle 10 is driving, as indicated by arrow 26 in **FIG. 1****.**

The aforementioned cost function may be determined, e.g. by the processing circuitry 22, for each possible gear of the gearbox 18 based on a n seconds ahead prediction (n may for example be 10) started with a shift for all the gears that are not currently engaged, from which some metrics are extracted, such as: integrated powertrain (energy) efficiency for the whole prediction; integrated difference between deliverable torque and demanded torque for the whole prediction; powertrain efficiency at a time instance in the prediction just after the shift is fulfilled; difference between deliverable torque and demanded torque at a time instance in the prediction just after the shift is fulfilled; time to reach overspeed of the at least one electric motor 12; and maximum possible acceleration at the start of the prediction. These metrics are then weighed together as a cost function. Other factors can be included here as well, such as discount for the current gear, extra cost for some unwanted shifts, etc. The gear with the lowest cost is checked against the current gear to see if conditions are fulfilled to shift. Conditions can depend based on driving scenarios but will mainly be based on: if the new gear has better energy efficiency at a time point just after the shift, or if the current gear cannot fulfil the power demand whilst the new gear can do so.

The aforementioned loss may for example be modelled as: $FrictionLoss = gbxLossConst * {ω}^{m} * {c}^{∧ \left(baseOilTemp-currentOilTemp\right)}$ (2) where gbxLossConst is a gear dependent friction loss factor, ω is main shaft speed in the gearbox 18, m is a model constant from empirical testing, c is a gear dependent factor (c may be used to describe the shape of the gearbox oil temperature dependency), baseOilTemp is an optimal temperature of the oil in the gearbox 18, currentOilTemp is the obtained current temperature T, and FrictionLoss is the modelled loss.

In a non-limiting example, current gear = highest low range, next gear = lowest high range, gbxLossConst(currgear) = 0.03, gbxLossConst(nextgear) = 0.015, Omega(currgear) = 1500 rpm, Omega(nextgear) = 500 rpm, m = 1.5, c(currgear) = 1.02, c(nextgear) = 1.01, baseOilTemp = 80 degrees Celsius, and currentOilTemp = 20 degrees Celsius. The FrictionLoss Current Gear without adjustment for currentOilTemp is 0.03*1500^1.5*1.02^0 = 1743 watt, whereas the FrictionLoss Current Gear with adjustment for currentOilTemp is 0.03*1500^1.5*1.02^60 = 5718 watt. Moreover, the FrictionLoss Next Gear without adjustment for currentOilTemp is 0.015*500^1.5*1.01^0 = 167 watt, whereas the FrictionLoss Next Gear with adjustment for currentOilTemp: 0.015*500^1.5*1.01^60 = 304 watt. The difference in losses is much bigger between currgear and nextgear when the gearbox oil temperature is considered (5414 watt difference vs. 1576 watt difference).

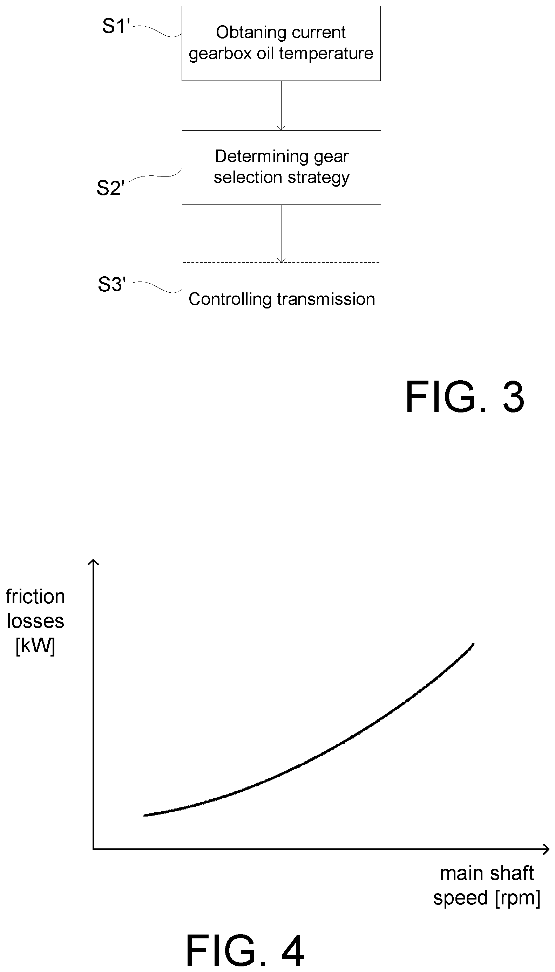

Moreover, as appreciated from ω^{m} in equation (2), the modelled loss may be increasingly nonlinear with main shaft speed in the gearbox 18. That is, the loss may initially rise slowly with main shaft speed, but as the main shaft speed increases, the loss rises more sharply, as exemplified by the graph in **FIG. 4****. In** **FIG. 4****,** friction losses in kW is on the vertical axis, and main shaft speed in rpm is on the horizontal axis. Moreover, the modelled loss may also be also specific for which gear of the gearbox 18 that is engaged. This is because at different gears, different parts of the gearbox 18 rotate, which gives different friction and thus different losses.

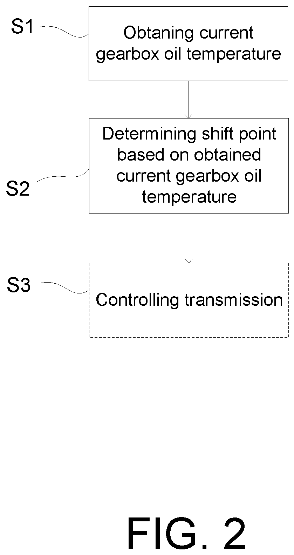

Turning to **FIG. 2, FIG. 2** illustrates an exemplary method for determining a shift point. The method may be computer-implemented. The method may at least partly correspond to operation of the computer system 20.

The method comprises obtaining S1, by processing circuitry 22 of computer system 20, the current temperature T of oil in gearbox 18 in transmission 16 of vehicle 10.

The method further comprises determining S2, by the processing circuitry 22, a shift point for the transmission 18 based on the obtained current temperature T.

Steps S1 and S2 may be repeated, e.g. continuously or at predetermined time intervals. Moreover, S2 may be performed for multiple shift points for the transmission 16.

The method may further comprise controlling S3, by the processing circuitry 22, the transmission 18 to shift gears at the determined shift point, such that the transmission 18 automatically shifts gears at the determined shift point while the vehicle 10 is driving.

**FIG. 3** illustrates an exemplary method for determining a gear selection strategy. The method may be computer-implemented. The method may at least partly correspond to operation of the computer system 20.

The method comprises obtaining S1', by processing circuitry 22 of computer system 20, the current temperature T of oil in gearbox 18 in transmission 16 of vehicle 10.

The method further comprises determining S2', by the processing circuitry 22, a gear selection strategy for the transmission 16 based on a cost function that weighs together metrics including powertrain efficiency of the vehicle 10, wherein a calculation of the powertrain efficiency includes a modelled loss dependent on the obtained current temperature T.

Steps S1' and S2' may be repeated, e.g. continuously or at predetermined time intervals.

The method may further comprise controlling S3', by the processing circuitry 22, the transmission 18 to shift gears in accordance with the determined gear selection strategy, such that the transmission 18 automatically shifts gears in accordance with the determined gear selection strategy while the vehicle 10 is driving.

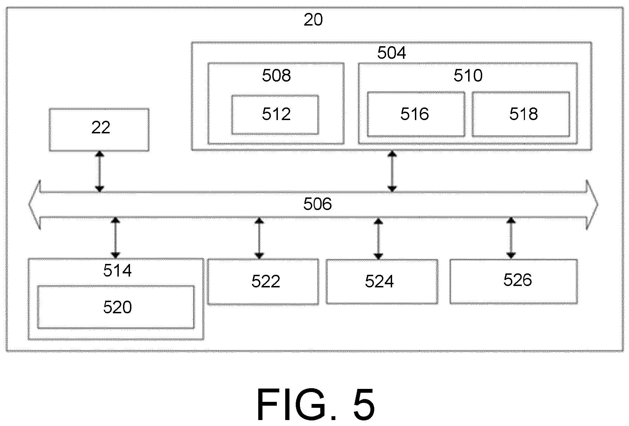

**FIG. 5** is a schematic diagram of a computer system 20 for implementing examples disclosed herein. The computer system 20 is adapted to execute instructions from a computer-readable medium to perform these and/or any of the functions or processing described herein. The computer system 20 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 20 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 20 may comprise at least one computing device or electronic device capable of including firmware, hardware, and/or executing software instructions to implement the functionality described herein. The computer system 20 may include processing circuitry 22 (e.g., processing circuitry including one or more processor devices or control units), a memory 504, and a system bus 506. The computer system 20 may include at least one computing device having the processing circuitry 22. The system bus 506 provides an interface for system components including, but not limited to, the memory 504 and the processing circuitry 22. The processing circuitry 22 may include any number of hardware components for conducting data or signal processing or for executing computer code stored in memory 504. The processing circuitry 22 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 22 may further include computer executable code that controls operation of the programmable device.

The system bus 506 may be any of several types of bus structures that may further interconnect to a memory bus (with or without a memory controller), a peripheral bus, and/or a local bus using any of a variety of bus architectures. The memory 504 may be one or more devices for storing data and/or computer code for completing or facilitating methods described herein. The memory 504 may include database components, object code components, script components, or other types of information structure for supporting the various activities herein. Any distributed or local memory device may be utilized with the systems and methods of this description. The memory 504 may be communicably connected to the processing circuitry 22 (e.g., via a circuit or any other wired, wireless, or network connection) and may include computer code for executing one or more processes described herein. The memory 504 may include non-volatile memory 508 (e.g., read-only memory (ROM), erasable programmable read-only memory (EPROM), electrically erasable programmable read-only memory (EEPROM), etc.), and volatile memory 510 (e.g., random-access memory (RAM)), or any other medium which can be used to carry or store desired program code in the form of machine-executable instructions or data structures and which can be accessed by a computer or other machine with processing circuitry 22. A basic input/output system (BIOS) 512 may be stored in the non-volatile memory 508 and can include the basic routines that help to transfer information between elements within the computer system 20.

The computer system 20 may further include or be coupled to a non-transitory computer-readable storage medium such as the storage device 514, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 514 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 514 and/or in the volatile memory 510, which may include an operating system 516 and/or one or more program modules 518. All or a portion of the examples disclosed herein may be implemented as a computer program 520 stored on a transitory or non-transitory computer-usable or computer-readable storage medium (e.g., single medium or multiple media), such as the storage device 514, which includes complex programming instructions (e.g., complex computer-readable program code) to cause the processing circuitry 22 to carry out actions described herein. Thus, the computer-readable program code of the computer program 520 can comprise software instructions for implementing the functionality of the examples described herein when executed by the processing circuitry 22. In some examples, the storage device 514 may be a computer program product (e.g., readable storage medium) storing the computer program 520 thereon, where at least a portion of a computer program 520 may be loadable (e.g., into a processor) for implementing the functionality of the examples described herein when executed by the processing circuitry 22. The processing circuitry 22 may serve as a controller or control system for the computer system 20 that is to implement the functionality described herein.

The computer system 20 may include an input device interface 522 configured to receive input and selections to be communicated to the computer system 20 when executing instructions, such as from a keyboard, mouse, touch-sensitive surface, etc. Such input devices may be connected to the processing circuitry 22 through the input device interface 522 coupled to the system bus 506 but can be connected through other interfaces, such as a parallel port, an Institute of Electrical and Electronic Engineers (IEEE) 1394 serial port, a Universal Serial Bus (USB) port, an IR interface, and the like. The computer system 20 may include an output device interface 524 configured to forward output, such as to a display, a video display unit (e.g., a liquid crystal display (LCD) or a cathode ray tube (CRT)). The computer system 20 may include a communications interface 526 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system comprising processing circuitry configured to: obtain a current temperature of oil in a gearbox in a transmission of a vehicle; and determine a shift point for the transmission based on the obtained current temperature.

Example 2: The computer system of example 1, wherein the determined shift point is positively correlated to the obtained current temperature.

Example 3: The computer system of any of examples 1-2, wherein the processing circuitry is configured to determine the shift point for the transmission by:$newShiftspeed = baseShiftspeed - \left(baseOilTemp-currentOilTemp\right) ∗ X$ where baseShiftSpeed is a default shift point, baseOilTemp is an optimal temperature of the oil in the gearbox, currentOilTemp is the obtained current temperature, X is a calibrated value of rpm, and newShiftspeed is the determined shift point.

Example 4: The computer system of any of examples 1-3, wherein the determined shift point is an upshift point or a downshift point.

Example 5: The computer system of any of examples 1-4, wherein the processing circuitry is further configured to control the transmission including the gearbox to shift gears at the determined shift point.

Example 6: The computer system of any of examples 1-5, wherein the processing circuitry is further configured to determine a gear selection strategy for the transmission based on a cost function that weights together metrics including powertrain efficiency of the vehicle, and wherein a calculation of the powertrain efficiency includes a modelled loss dependent on the obtained current temperature.

Example 7: The computer system of example 6, wherein said loss is modelled as: $FrictionLoss = gbxLossConst * {ω}^{m} * {c}^{∧ \left(baseOilTemp-currentOilTemp\right)}$ where gbxLossConst is a gear dependent friction loss factor, ω is main shaft speed in the gearbox, m is a model constant from empirical testing, c is a gear dependent factor, baseOilTemp is an optimal temperature of the oil in the gearbox, currentOilTemp is the obtained current temperature, and FrictionLoss is the modelled loss

Example 8: The computer system of any of examples 6-7, wherein the modelled loss is increasingly nonlinear with main shaft speed in the gearbox.

Example 9: The computer system of any of examples 6-8, wherein the processing circuitry is further configured to control the transmission including the gearbox to shift gears in accordance with the determined gear selection strategy.

Example 10: A vehicle comprising the computer system of any of examples 1-9.

Example 11: A computer-implemented method, comprising: obtaining, by processing circuitry of a computer system, a current temperature of oil in a gearbox in a transmission of a vehicle; and determining, by the processing circuitry, a shift point for the transmission based on the obtained current temperature.

Example 12: The method of example 11, wherein the determined shift point is positively correlated to the obtained current temperature.

Example 13: The method of any of examples 11-12, wherein the shift point for the transmission is determined by: $newShiftspeed = baseShiftspeed - \left(baseOilTemp-currentOilTemp\right) * X$ where baseShiftSpeed is a default shift point, baseOilTemp is an optimal temperature of the oil in the gearbox, currentOilTemp is the obtained current temperature, X is a calibrated value of rpm, and newShiftspeed is the determined shift point.

Example 14: The method of any of examples 11-13, wherein the determined shift point is an upshift point or a downshift point.

Example 15: The method of any of examples 11-14, further comprising: controlling, by the processing circuitry, the transmission including the gearbox to shift gears at the determined shift point.

Example 16: The method of any of examples 11-15, further comprising: determining, by the processing circuitry, a gear selection strategy for the transmission based on a cost function that weighs together metrics including powertrain efficiency of the vehicle, and wherein a calculation of the powertrain efficiency includes a modelled loss dependent on the obtained current temperature.

Example 17: The method of example 16, wherein said loss is modelled as: $FrictionLoss = gbxLossConst * {ω}^{m} * {c}^{∧ \left(baseOilTemp-currentOilTemp\right)}$ where gbxLossConst is a gear dependent friction loss factor, ω is main shaft speed in the gearbox, m is a model constant from empirical testing, c is a gear dependent factor, baseOilTemp is an optimal temperature of the oil in the gearbox, currentOilTemp is the obtained current temperature, and FrictionLoss is the modelled loss.

Example 18: The method of any of examples 16-17, further comprising: controlling, by the processing circuitry, the transmission including the gearbox to shift gears in accordance with the determined gear selection strategy.

Example 19: A computer program product comprising program code for performing, when executed by the processing circuitry, the method of any of examples 11-18.

Example 20: A non-transitory computer-readable storage medium comprising instructions, which when executed by the processing circuitry, cause the processing circuitry to perform the method of any of examples 11-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (20) comprising processing circuitry (22) configured to:
obtain a current temperature (T) of oil in a gearbox (18) in a transmission (16) of a vehicle (10); and
determine a shift point for the transmission based on the obtained current temperature.

2. The computer system of claim 1, wherein the determined shift point is positively correlated to the obtained current temperature.

3. The computer system of any of claims 1-2, wherein the processing circuitry is configured to determine the shift point for the transmission by:$newShiftspeed = baseShiftspeed - \left(baseOilTemp-currentOilTemp\right) ∗ X$ where baseShiftSpeed is a default shift point, baseOilTemp is an optimal temperature of the oil in the gearbox, currentOilTemp is the obtained current temperature, X is a calibrated value of rpm, and newShiftspeed is the determined shift point.

4. The computer system of any of claims 1-3, wherein the determined shift point is an upshift point or a downshift point.

5. The computer system of any of claims 1-4, wherein the processing circuitry is further configured to control the transmission including the gearbox to shift gears at the determined shift point.

6. The computer system of any of claims 1-5, wherein the processing circuitry is further configured to determine a gear selection strategy for the transmission based on a cost function that weights together metrics including powertrain efficiency of the vehicle, and wherein a calculation of the powertrain efficiency includes a modelled loss dependent on the obtained current temperature.

7. The computer system of claim 6, wherein said loss is modelled as: $FrictionLoss = gbxLossConst * {ω}^{m} * {c}^{∧ \left(baseOilTemp-currentOilTemp\right)}$ where gbxLossConst is a gear dependent friction loss factor, ω is main shaft speed in the gearbox, m is a model constant from empirical testing, c is a gear dependent factor, baseOilTemp is an optimal temperature of the oil in the gearbox, currentOilTemp is the obtained current temperature, and FrictionLoss is the modelled loss.

8. The computer system of any of claims 6-7, wherein the processing circuitry is further configured to control the transmission including the gearbox to shift gears in accordance with the determined gear selection strategy.

9. A vehicle (10) comprising the computer system (20) of any of claims 1-8.

10. A computer-implemented method, comprising:
obtaining (S1), by processing circuitry (22) of a computer system (20), a current temperature (T) of oil in a gearbox (18) in a transmission (16) of a vehicle (10); and
determining (S2), by the processing circuitry, a shift point for the transmission based on the obtained current temperature.

11. The method of claim 10, wherein the shift point for the transmission is determined by: $newShiftspeed = baseShiftspeed - \left(baseOilTemp-currentOilTemp\right) * X$ where baseShiftSpeed is a default shift point, baseOilTemp is an optimal temperature of the oil in the gearbox, currentOilTemp is the obtained current temperature, X is a calibrated value of rpm, and newShiftspeed is the determined shift point.

12. The method of any of claims 10-11, further comprising:
controlling (S3), by the processing circuitry, the transmission including the gearbox to shift gears at the determined shift point.

13. The method of any of claims 10-12, further comprising:
determining (S2'), by the processing circuitry, a gear selection strategy for the transmission based on a cost function that weighs together metrics including powertrain efficiency of the vehicle, and wherein a calculation of the powertrain efficiency includes a modelled loss dependent on the obtained current temperature.

14. A computer program product comprising program code for performing, when executed by the processing circuitry (22), the method of any of claims 10-13.

15. A non-transitory computer-readable storage medium comprising instructions, which when executed by the processing circuitry (22), cause the processing circuitry to perform the method of any of claims 10-13.
